# FASCICULE DE BREVET EUROPEEN

(11) **EP 3 174 929 B1**
(45) Date de publication et mention de la délivrance du brevet: **13.01.2021**
(21) Numéro de dépôt: 15756682.9
(22) Date de dépôt: 30.07.2015
(51) Int. Cl.: C08L 27/16, C08K 7/14, C08K 9/06, F16L 47/20

(54) **RACCORD PERMETTANT DE CONNECTER LES EXTRÉMITÉS DE DEUX CONDUITES**
KUPPLUNG, DIE ZWEI ROHRENDEN VERBINDET
CONNECTOR FOR THE CONNECTION OF EXTREMITIES OF TWO PIPES

(30) Priorité: 31.07.2014 FR 1457431
(43) Date de publication de la demande: 07.06.2017
(73) Titulaire: Arkema France, 92700 Colombes (FR)
(72) Inventeur: RONDIN, Jérôme, F-27300 Courbepine (FR); ABGRALL, Florent, F-27300 Bernay (FR); LABOUR, Thomas, 27930 Aviron (FR); WIEGERT, Barbara, 60127 Morienval (FR); ZERAFATI, Saeid, Villanova, Pennsylvania 19085 (US)
(74) Mandataire: Arkema Patent
(86) Numéro de dépôt international: PCT/FR2015/052113
(87) Numéro de publication internationale: WO 2016/016583

(56) Documents cités:
- FR-A1- 2 019 453
- FR-A1- 2 343 019
- US-A1- 2013 025 730
- ZHAO JIE ET AL: "A comparative study of fibre/matrix interface in glass fibre reinforced polyvinylidene fluoride composites", COLLOIDS AND SURFACES. A, PHYSICACHEMICAL AND ENGINEERING ASPECTS, vol. 413, 24 février 2012 (2012-02-24), pages 58-64, XP028943909, ISSN: 0927-7757, DOI: 10.1016/J.COLSURFA.2012.02.018
- Arkema: "Kynar and Kynar flex PVDF ; Performance characteristics & Data", Arkema , 1 octobre 2009 (2009-10-01), XP002737450, Extrait de l'Internet: URL:http://americas.kynar.com/export/sites /kynar-americas/.content/medias/downloads/ literature/kynar-kynar-flex-performance-ch aracteristics.pdf [extrait le 2015-03-18]
- aetna plastics corporation: "Chemtrol; PVDF Pipe, Valves and Fittings", aetna plastics corporation , 23 septembre 2013 (2013-09-23), XP002737451, Extrait de l'Internet: URL:http://www.aetnaplastics.com/site_medi a/media/attachments/aetna_product_aetnapro duct/79/Chemtrol%20Kynar%20Dimensional%20G uide.pdf [extrait le 2015-03-18]

## Description

Le poly fluorure de vinylidène ou PVDF est inerte chimiquement à de nombreux composés. Ainsi, il est résistant aux agents de traitement de l'eau tel que les agents chlorés (hypochlorite de sodium, dioxyde de chlore...). De plus sa grande résistance au vieillissement assure l'intégrité du produit réalisé en PVDF sur le long terme et évite toute contamination de l'eau. Il permet aussi de limiter la croissance de biofilms sur la paroi interne du tube.

Par conséquent, les propriétés chimiques du PVDF en font un matériau tout à fait adapté dans la construction des tubes assurant le transport d'eau, ainsi que des raccords reliant ces tubes.

Le PVDF présente néanmoins une mauvaise résistance au fluage, notamment à des températures de l'ordre de 90-100°C ; lorsque le PVDF est soumis à une contrainte, il se déforme dans le temps de manière irréversible, ce qui, dans les cas extrêmes, peut générer des fuites dans le circuit de transport d'eau.

Le document US 2013/0025730 A1 propose un raccord composite permettant de raccorder deux conduites d'eau, qui présente des propriétés mécaniques améliorées. Ce raccord comporte une partie en croix formée de tubes métalliques en acier inoxydable et des manchons de fixation en PVDF. Les extrémités des conduites d'eau sont montées autour des extrémités des tubes métalliques et les manchons de fixation qui sont courts viennent recouvrir cette zone de chevauchement entre tubes métalliques et conduites.

Le raccord décrit dans le document US 2013/0025730 A1 est complexe et couteux à fabriquer.

Un but de la présente invention est de proposer un raccord pour conduite, notamment pour conduite de transport d'eau, qui présente de bonnes propriétés mécaniques, notamment une rigidité accrue par rapport au PVDF seul, même à des températures de l'ordre de 90-100°C, par exemple 95°C et/ou une bonne résistance au fluage, en particulier à des températures telles que précitées et/ou une bonne résistance aux chocs sur une gamme de températures allant de 0 à 100°C, tout en conservant une inertie chimique notamment vis-à-vis des composés utilisés pour le traitement de l'eau et une résistance au vieillissement importante.

Un autre but de la présente invention est de proposer un raccord qui puisse être obtenu par injection.

S'agissant du PVDF lui-même, on a envisagé pour augmenter sa rigidité et donc, dans le même temps, sa résistance au fluage, d'y incorporer des fibres de verre qui servent de renfort. Or, contrairement aux autres polymères pour lesquels le mélange des fibres de verre dans le polymère fondu ne pose pas de problème, dans le cas du PVDF, la réactivité chimique entre les fibres de verre et le PVDF ainsi que l'auto-échauffement du PVDF au voisinage de la surface des fibres de verre engendre une réaction de déshydrofluoration qui libère de l'acide fluorhydrique, gaz toxique et corrosif pour la plupart des matériaux. En milieu confiné, le dégagement de ce gaz dû à la dégradation du PVDF induite par les fibres de verre peut même aboutir à une explosion.

Le document FR 2343019 décrit l'utilisation de fibres de verre de composition spéciale qui sont considérées comme pouvant être utilisées avec le PVDF pour former un matériau composite thermoplastique, qui, lorsqu'il est utilisé à l'état fondu pour former des pièces, est sans danger c'est-à-dire qu'il ne dégage pas ou dégage peu d'acide fluorhydrique. La compatibilité des fibres avec le PVDF est déterminée par plusieurs critères qui doivent être cumulés. Ainsi, le mélange PVDF-fibres de verre est jugé utilisable comme matériau thermoplastique, lorsque la perte de poids induite par chauffage à une vitesse de chauffe constante de 8°C /min jusqu'à 300°C est nulle, lorsque une perte de poids de 1% n'est observée qu'au-dessus de 350°C et lorsque par chauffage à 350°C à une vitesse de chauffe de 8°C/min, la perte de poids détectée au bout de 15 min à 350°C n'est pas supérieure à 5% dans le cas d'une perte de poids détectée dans un domaine de température de 300°C à 350°C et n'est pas supérieure à 15% lorsque la perte de poids débute à 350°C. Ce document indique également que le matériau composite obtenu présente un module de Young plus élevé que le PVDF seul mais montre également qu'il n'y a aucune corrélation entre la température à laquelle on observe 1% de perte de poids et l'augmentation du module d'Young. Ainsi, parmi les matériaux composites jugés utilisables, celui qui présente la température de début de dégradation thermique (perte de poids de 1%) la plus élevée n'est pas celui qui présente le module d'Young le plus élevé. Il ressort de ce document qu'il n'est pas aisé pour l'Homme du Métier d'utiliser des fibres de verre en mélange avec du PVDF en vue d'obtenir un matériau composite qui d'une part ne se dégrade pas à l'état fondu lorsqu'il est utilisé pour former des pièces par injection et qui d'autre part permet de former des pièces qui présentent des propriétés mécaniques améliorées.

Les fibres de verre décrites dans le document FR 2 343019 contiennent entre 10 et 28% en poids d'oxydes basiques et jusqu'à 6% d'oxyde de bore.

Le document US 3575857 décrit lui, l'utilisation d'un mélange de PVDF, de fibres de verre et de polymères de formule générale R-(CF₂CF₂)ₙ-X, dans laquelle R est un perfluoro-alkyl comprenant de 1 à 4 atomes de carbone ou un chloro-perfluoro-alkyle comprenant de 1 à 4 atomes de carbone et un atome de chlore, n est un entier supérieur ou égal à 6 et inférieur ou égal à 16 et X est choisi parmi le chlore, le fluor et l'iode. Cette composition permet de former par compression-moulage des paliers, le polymère faisant office de lubrifiant. Le mélange fibres de verre-télomères-PVDF est réalisé par coagulation du PVDF en présence des fibres de verre et des télomères. On obtient un matériau solide qui est utilisé pour fabriquer des paliers par compression moulage à 225°C. La température de dégradation du PVDF n'est pas indiquée pas plus que la température de début de dégradation du mélange.

Le document JP H1-139628 décrit un matériau composite contenant un polymère fluoré et un tissu de fibres de verre traité avec un alcoxysilane de formule générale CF₃CH₂CH₂SiX₃ dans laquelle X est un radical hydrolysable du type alcoxy contenant 1 à 4 atomes de carbone. Ce matériau est utilisé dans le domaine des isolants électriques et présente une résistance d'isolement stable.

La présente invention propose un raccord permettant de connecter les extrémités de deux conduites qui, selon l'invention, de manière caractéristique comprend un mélange de PVDF et de fibres de verre. Selon un mode de réalisation, ledit raccord consiste en un mélange de PVDF et de fibres de verre.

La Demanderesse a en effet constaté que l'utilisation d'un tel mélange permettait d'obtenir un raccord qui présente notamment une rigidité accrue par rapport au même raccord en PVDF seul et des propriétés mécaniques améliorées.

Avantageusement, le raccord comporte en masse au moins 60%, de préférence au moins 80%, avantageusement au moins 90% et plus particulièrement au moins 98% du mélange précité. Le reste de la masse du raccord peut être formé par au moins un additif tel qu'exposé dans la suite de la présente description.

Selon un mode de réalisation, les fibres de verre et le PVDF sont choisis de manière à ce que le mélange de PVDF et de fibres de verre seuls présente une température de début de dégradation thermique sensiblement égale ou supérieure à Tdp-20°C, de préférence égale ou supérieure à Tdp-15°C, et sensiblement égale ou inférieure à Tdp, Tdp étant la température de début de dégradation thermique dudit PVDF. La Demanderesse a mis en évidence qu'il était ainsi possible, en choisissant les fibres de verre compatibles avec le PVDF et le PVDF lui-même, d'obtenir un raccord présentant une bonne résistance au fluage, même à une température de 95°C.

Avantageusement, ledit mélange de PVDF et de fibres de verre présente une température de début de dégradation thermique sensiblement égale ou supérieure à Tdp-10°C, en particulier sensiblement égale à Tdp-6°C et sensiblement égale ou inférieure à Tdp-2°C.

Ledit PVDF est un homopolymère. On peut citer par exemple les produits commercialisés par la société ARKEMA sous le nom KYNAR®. Un raccord à base de PVDF homopolymère peut être obtenu par injection et présente un faible retrait. Avantageusement, le PVDF présente une viscosité apparente à l'état fondu allant de 200 à 2500 Pa.s, de préférence de 500 à 1500 Pa.s, bornes comprises. La viscosité apparente est mesurée sur un rhéomètre plan-plan à une température de 230°C et un cisaillement de 100s⁻¹.

Les fibres de verre utilisées sont compatibles avec le PVDF de manière à ne générer que peu ou pas d'émanation d'acide fluorhydrique lors de leur mélange. En particulier, le mélange desdites fibres de verre et du PVDF obtenu à une température de mélange égale ou supérieure à 200°C et égale ou inférieure à 300°C et notamment égale à 250°C ne se dégrade pas thermiquement lorsqu'il est maintenu à ladite température de mélange pendant 10min et en particulier 15min.

Ces fibres de verre contiennent entre 10% et 30% en poids d'oxydes basiques, à savoir d'oxydes des éléments du premier et deuxième groupe du tableau périodique, et sont exemptes d'oxydes de bore. Les fibres de verre peuvent être des fibres de verre ensimées, par exemple, des fibres de verre ensimées par une solution contenant un composé du type alcoxysilane. Il peut s'agir de fibres traitées par ensimage avec la même solution que celle décrite dans le document JP H1 139628 précité.

Selon un mode de réalisation, le mélange comprend une masse de fibres de verre sensiblement égale ou supérieure à 5% et sensiblement égale ou inférieure à 50%, avantageusement sensiblement égale ou supérieure à 10% et sensiblement égale ou inférieure à 20% de la masse totale dudit mélange.

Le raccord selon l'invention peut présenter, séparément ou en combinaison, les propriétés suivantes :
- une déformation en fluage mesurée à 95°C sous une contrainte égale à 13Mpa durant 15 heures sensiblement égale ou inférieure à 2%, de préférence inférieure à 1 % ;
- un module d'élasticité en traction, mesuré à 23°C selon la norme ISO 527 supérieur à 4000 MPa, de préférence supérieur à 6000 MPa ;
- une contrainte au seuil d'écoulement, également mesurée en traction à 23°C selon la norme ISO 527, supérieure ou égale à 60 MPa ;
- un retrait longitudinal et transversal, après mise en forme par injection, égal ou inférieur à 2%. Ces valeurs de retrait correspondent au rapport entre les dimensions d'une plaque injectée et du moule ayant servi à sa fabrication, mesurées après un intervalle de temps défini, par exemple 24h.

Avantageusement, le raccord comprend, en outre, au moins un additif choisi parmi les pigments, les modifiants chocs et les agents antioxydants. A titre d'exemple de pigment, on peut citer les oxydes métalliques tels que ceux de zinc ou de titane.

A titre d'exemple de modifiant choc, on peut citer les particules core-shell possédant un cœur élastomère ou acrylique et une écorce thermoplastique. On peut citer les produits commercialisés par la société Arkema sous le nom Durastrength® et Clearstrength®.

A titre d'exemple d'agent antioxydant, on peut citer des produits comme l'Irganox® 1010, l'Irganox® 1098 ou l'Irgafos® 168.

Avantageusement, le raccord selon l'invention est obtenu par injection.

La présente invention concerne également l'utilisation du raccord selon l'invention pour raccorder des conduites d'eau et en particulier des conduites d'eau potable.

### Définitions

Selon l'invention, le terme «PVDF» désigne un homopolymère de fluorure de vinylidène.

Selon l'invention, les termes « fibres de verre compatibles avec le polymère fluoré » désignent les fibres de verre qui ne génèrent pas ou peu d'émanation d'acide fluorhydrique. Ces termes désignent en particulier les fibres de verre qui mélangées avec un PVDF homopolymère à une température de mélange sensiblement égale ou supérieure à 200°C et sensiblement égale ou inférieure à 300°C et notamment sensiblement égale à 250°C forment un mélange qui ne se dégrade pas thermiquement lorsqu'il est maintenu à la température de mélange précitée pendant 10min et de préférence 15min. La dégradation thermique peut être détectée par la perte de poids ou simplement par un changement de couleur du mélange visible à l'œil, le mélange changeant de couleur et pouvant devenir brunâtre.

Selon l'invention, les termes « fibres de verre » désignent des fils, filaments, fibres ou microfibres composés de verre et qui sont aptes à être mélangés à du PVDF soit seul soit en combinaison avec un agent spécifique comme décrit dans le document US 3 575 857, par exemple. Les termes « fibre de verre » recouvrent les fibres de verre contenant entre 10% et 30% en poids d'oxydes basiques, à savoir d'oxydes des éléments du premier et deuxième groupe du tableau périodique, et sont exemptes d'oxydes de bore; ils englobent également les fibres non ensimées et les fibres ensimées c'est-à-dire les fibres de verre qui ont été trempées avant utilisation dans une solution spécifique et sont donc recouverte d'une couche de composé(s) contenu dans cette solution.

La longueur et le diamètre des fibres ne sont pas limités selon l'invention. Ainsi le diamètre des fibres avant mélange et/ou fabrication, par exemple, par injection, du raccord selon l'invention peut être sensiblement égal ou supérieur à 5µm et sensiblement égal ou inférieur à 20µm; la longueur de la fibre également avant mélange et/ou fabrication, par exemple, par injection, du raccord selon l'invention, peut être sensiblement égale ou supérieure à 0,5mm et sensiblement égale ou inférieure à 5mm.

Les termes « température de début de dégradation thermique » font référence à l'analyse thermogravimétrique (ATG) qui consiste à mesurer en continu la masse d'un échantillon alors que celui-ci subit simultanément un traitement thermique ; par exemple, la température augmente de 10°C/min sur une gamme allant de 25 à 600°C. L'appareil se compose d'une micro-balance permettant la pesée de l'échantillon. Celui-ci se trouve dans une chambre hermétique sous atmosphère d'air.

La température de début de dégradation thermique du mélange PVDF-fibres de verre correspond à la température obtenue pour un mélange constitué uniquement de fibre de verre et de PVDF. La température de dégradation thermique de la composition contenant ce mélange est différente de celle du mélange lorsque la composition contient, en plus du mélange, au moins un additif. Les additifs cités dans la présente demande peuvent présenter une température de dégradation thermique plus basse que le mélange de PVDF et fibre de verre seul. La température de dégradation thermique de la composition par rapport à celle du PVDF seul est alors plus faible sans qu'il y ait incompatibilité entre le verre et le PVDF.

Les termes «résistance au fluage » font référence en particulier à la méthode utilisée dans les exemples de la présente demande de brevet et concernent des contraintes d'intensité sensiblement égale ou supérieure à 10 MPa et sensiblement inférieure ou égale à 20 MPa appliquées à une température de 95°C. Les mesures indiquées dans la suite de la présente description sont obtenues suivant les conditions définies dans la norme ISO 899 sur des éprouvettes ISO 527 1A.

### Exemples

Les abréviations suivantes sont utilisées dans la suite de la présente demande. Elles correspondent aux matériaux suivants :
- PVDF : Kynar® 720 commercialisé par la société Arkéma ;
- PPSU : Poly-phényle sulfone grade Radell R-5100 commercialisé par la société Solvay ;
- FV1 : fibre de verre grade Hiper-Tex, commercialisée par la société 3B ;
- FV2 : fibre de verre de référence CS108F-14P, commercialisé par la société 3B ;
- FV3 : fibre de verre de référence DS1135-10N, commercialisée par la société 3B. Cette fibre contient approximativement 28% d'oxydes basiques et ne contient pas d'oxyde de bore ;
- FV4 : Fibre de verre de référence 923-10C commercialisé par la société Owens Corning ;
- FV5 : Fibre de verre de référence 995-10P commercialisé par la société Owens Corning ;
- FV6 : Fibre de verre de référence HP-3540 commercialisé par la société PPG ;
- Fibre de verre de référence HP-3610 commercialisé par la société PPG ;
- FV8 : Fibre de verre de référence HP-3299 commercialisé par la société PPG.

### Exemple 1 : Obtention du mélange et analyse thermogravimétrique

### Mélange et détection de la compatibilité chimique fibres de verre - PVDF

Des mélanges de PVDF avec chacune des fibres de verre FV1 à FV8 ont été successivement préparés en mélangeur interne Brabender® afin d'évaluer la stabilité thermique de chaque mélange. Le PVDF seul a subi le même procédé pour être utilisé comme référence. Le chauffage du mélangeur est choisi de manière à exposer les mélanges à une température de 250°C pendant 15 minutes. Une vitesse de 80 tours par minute est appliquée sur les 2 rotors de l'appareil de manière à obtenir un mélange homogène. En cas d'incompatibilité entre la fibre et la matrice, cette exposition prolongée à haute température laisse le temps aux réactions de dégradation d'avoir lieu. Une coloration brunâtre indique l'existence de réactions de dégradation. En effet, une couleur brune est le signe de la formation de doubles liaisons dans le PVDF, issues de la déshydrofluoration générée par la présence des fibres de verre.

En sortie du mélangeur interne, le mélange PVDF + FV1 est le plus coloré ce qui indique que les fibres FV1 ne peuvent pas être mélangées à du PVDF à 250°C sans dégrader significativement ce dernier. Les fibres FV1 sont donc incompatibles avec le PVDF.

A l'inverse, il n'est pas observé de coloration particulière du PVDF dû à une dégradation lorsque les fibres FV2, FV3, FV4, FV5, FV6, FV7 et FV8 sont utilisées. Ces fibres de verre sont donc suffisamment stables en mélange avec du PVDF pour permettre la mise en œuvre du mélange et d'une composition selon la présente invention.

### Analyse thermogravimétrique

Le mélange obtenu est ensuite analysé par analyse thermogravimétrique (ATG) de manière à mesurer la température de début de dégradation du mélange.

L'analyse thermogravimétrique consiste à faire varier la température de 20°C à 600°C avec vitesse de 10°C par minute sous un balayage d'air tout en suivant la masse du produit en continu à l'aide d'une micro balance Mettler-Toledo. Le changement de la pente de la courbe de suivi de la masse de l'échantillon en fonction de la température indique le seuil de dégradation du produit. Le Tableau I suivant regroupe les résultats de l'analyse thermogravimétrique obtenus avec le PVDF seul ainsi qu'avec les différents mélanges PVDF-fibres de verre.

Une seconde analyse thermogravimétrique consiste à chauffer rapidement les mêmes mélanges de PVDF et fibre de verre à 50°C/min jusqu'à atteindre une température de 270°C, puis de conserver cette température pendant 1h. L'échantillon est conservé sous un balayage d'air. La perte de masse au cours de cet isotherme est relevée.

Ces résultats corroborent l'incompatibilité entre la fibre FV1 et le PVDF détectée lors de l'étape de mélange ; en effet, l'écart entre la température de dégradation du PVDF seul et celle du mélange FV1+PVDF est plus important que les autres fibres.

**Tableau I**

| Composition | Teneur massique en fibre (%) | Température de début de dégradation sous air (°C) | Perte de masse en isotherme 1h à 270°C (%) |
|---|---|---|---|
| PVDF seul | 0 | 424 | 0,09 |
| PVDF +FV1 | 10 | 394 | |
| PVDF +FV2 | 30 | 426 | 0,11 |
| PVDF +FV3 | 30 | 418 | 0,13 |
| PVDF +FV4 | 20 | 428 | |
| PVDF +FV5 | 20 | 427 | |
| PVDF +FV6 | 20 | 405 | |
| PVDF +FV7 | 20 | 406 | |
| PVDF +FV8 | 20 | 425 | |

Le seuil de dégradation relevé avec dans les mélanges PVDF + FV6 et PVDF + FV7 reste dans les limites de compatibilité, c'est-à-dire qu'il y a moins de 20°C d'écart avec la température de dégradation du PVDF pur. Néanmoins, les meilleures compatibilités entre fibre de verre et PVDF sont observées avec l'utilisation des fibres FV2, FV3, FV4, FV5 et FV8. Le seuil de dégradation du mélange chargé est alors similaire à celui du polymère pur.

La mesure isotherme à 270°C sous balayage d'air confirme la stabilité des mélanges de fibres de verre FV2 et FV3 en matrice PVDF à haute température.

### Exemple 2 : Propriété thermo-mécaniques

Des mélanges de PVDF et fibres de verre FV2 et FV3 sont préparés par « compoundage » sur malaxeur Buss dans des conditions conformes aux règles de l'art, à 210°C. Puis ces mélanges sont injectés à 250°C, là aussi dans des conditions conformes aux règles de l'art pour former des éprouvettes telles que décrites ultérieurement. Des éprouvettes de PVDF seul ainsi que des éprouvettes de PPSU seul (ces dernières étant injectées à 350°C) sont également fabriquées par injection, pour servir de référence.

On a mesuré sur un dynamomètre Zwick 1455 la résistance à la traction de chacune des éprouvettes, à 23°C sur des haltères de type ISO 527-1A. La déformation des éprouvettes est mesurée par extensomètre optique avec une vitesse de déplacement de l'appareil fixée à 50 mm/min. Ces conditions sont conformes à la norme ISO 527.

La mesure de déformation en fluage a été réalisée pendant 15h sous une contrainte de 13 MPa à une température fixée à 95°C.

La température de fléchissement sous charge est mesurée sur un appareil de Tinius Olsen model 603 selon la norme ASTM D648 méthode A. La longueur entre les 2 fixations de l'échantillon est de 101,6mm. Celui-ci est de forme parallélépipédique présentant une largeur et une hauteur de 10 et 4mm respectivement. Une pression de 18,2 bar est appliquée sur l'échantillon. La température de celui-ci est élevée à une vitesse de 120°C/h. La course de l'appareil est de 0,25mm.

La mesure de retrait est réalisée à partir de l'injection de plaques de 100x100x2 mm effectuée à 250°C. L'écart par rapport aux côtes dans le sens longitudinal et transversal est mesuré après 24h.

Les résultats de ces mesures sont regroupés dans le Tableau II ci-dessous.

L'exemple de la fibre FV2 montre que malgré la compatibilité chimique de cette fibre, son ajout n'entraine qu'une augmentation du module élastique mais n'a aucune influence sur la contrainte au seuil d'écoulement et la déformation au fluage. La fibre FV2 ne présente donc pas d'intérêt pour une utilisation comme raccord de circuit de transport d'eau. Elle illustre qu'une augmentation des propriétés de résistance à la déformation mécanique du matériau n'est pas liée à la compatibilité chimique à chaud entre la fibre de verre et le PVDF. Ces deux propriétés sont distinctes du point de vue de l'application souhaitée pour le mélange testé, à savoir des raccords.

**Tableau II**

| Mélange | Teneur massique en fibre (%) | Contrainte au seuil d'écoulement (MPa) | Module élastique (MPa) | Déformation en fluage 13MPa (%) | Température de fléchissement sous charge (°C) | Retrait longitudinal-transversal (%) |
|---|---|---|---|---|---|---|
| PVDF | 0 | 51,6 | 1900 | 19,3 | 69 | 2,7 - 2,2 |
| PVDF+FV2 | 20 | 50,2 | 7200 | 22 | - | - |
| PVDF+FV3 | 10 | 63 | 4500 | 1,6 | 132 | 1,4 - 2,0 |
| PVDF+FV3 | 20 | 67,5 | 7000 | 0,4 | 152 | 0,5 - 1,2 |
| PPSU | 0 | 74,6 | 2300 | 0,7 | - | 0,8 - 0,6 |

Au contraire, on constate que l'ajout des fibres FV3 procure une augmentation du module élastique, de la contrainte de seuil d'écoulement, de la température de fléchissement sous charge, une diminution du retrait sous charge et une diminution de la déformation en fluage. Ces fibres renforcent donc la résistance à la déformation du matériau obtenu sur toute la gamme de sollicitation appliquée au matériau, ce qui le rend particulièrement adapté à une utilisation comme raccord.

Par ailleurs, la résistance au fluage de PVDF dans lequel on a ajouté 20% de fibres FV3 est comparable à un matériau comme le PPSU. L'avantage de la composition de l'invention est de présenter une résistance chimique supérieure, comme montré lors de son exposition aux agents de traitement de l'eau tel que le chlore.

## Revendications

1. Raccord permettant de connecter les extrémités de deux conduites, **caractérisé en ce qu'**il comprend un mélange de PVDF homopolymère et de fibres de verre et **en ce qu'**il présente une contrainte au seuil d'écoulement, mesurée en traction à 23°C selon la norme ISO 527, supérieure ou égale à 60 MPa.

2. Raccord selon la revendication 1, **caractérisé en ce qu'**il présente un module d'élasticité en traction, mesuré à 23°C selon la norme ISO 527 supérieur à 4000 MPa, de préférence supérieur à 6000 MPa.

3. Raccord selon l'une quelconque des revendications précédentes, **caractérisé en ce que** ledit mélange comprend une masse de fibres de verre égale ou supérieure à 5% et égale ou inférieure à 50%, en particulier égale ou supérieure à 10% et égale ou inférieure à 20% de la masse totale dudit mélange.

4. Raccord selon l'une quelconque des revendications précédentes, **caractérisé en ce que** lesdites fibres de verre contiennent entre 10% et 30% en poids d'oxydes basiques et sont exemptes d'oxydes de bore.

5. Raccord selon l'une quelconque des revendications précédentes, **caractérisé en ce que** lesdites fibres de verre sont des fibres de verre ensimées par une solution contenant un composé du type alcoxysilane.

6. Raccord selon l'une quelconque des revendications précédentes, **caractérisé en ce qu'**il présente une déformation en fluage mesurée à 95°C sous une contrainte égale à 13Mpa durant 15 heures sensiblement égale ou inférieure à 2 %, de préférence inférieure à 1 %.

7. Raccord selon l'une quelconque des revendications précédentes, **caractérisé en ce qu'**il comprend, en outre, au moins un additif choisi parmi les pigments, les modifiants chocs et les agents antioxydants.

8. Raccord selon l'une quelconque des revendications précédentes, **caractérisé en ce qu'**il est obtenu par injection.

9. Utilisation du raccord selon l'une quelconque des revendications précédentes, pour raccorder des conduites d'eau et en particulier des conduites d'eau potable.

## Patentansprüche

1. Verbinder, der das Verbinden der Enden von zwei Rohrleitungen ermöglicht, **dadurch gekennzeichnet, dass** er eine Mischung von PVDF-Homopolymer und Glasfasern umfasst und dass er eine unter Zug bei 23 °C gemäß ISO-Norm 527 gemessene Streckspannung größer als oder gleich 60 MPa aufweist.

2. Verbinder nach Anspruch 1, **dadurch gekennzeichnet, dass** er einen bei 23 °C gemäß ISO-Norm 527 gemessenen Zugelastizitätsmodul von mehr als 4000 MPa, vorzugsweise mehr als 6000 MPa, aufweist.

3. Verbinder nach einem der vorhergehenden Ansprüche, **dadurch gekennzeichnet, dass** die Mischung eine Glasfasermasse gleich oder größer als 5 % und gleich oder kleiner als 50 %, insbesondere gleich oder größer als 10 % und gleich oder kleiner als 20 %, der Gesamtmasse der Mischung umfasst.

4. Verbinder nach einem der vorhergehenden Ansprüche, **dadurch gekennzeichnet, dass** die Glasfasern zwischen 10 und 30 Gew.-% basische Oxide enthalten und frei von Boroxiden sind.

5. Verbinder nach einem der vorhergehenden Ansprüche, **dadurch gekennzeichnet, dass** es sich bei den Glasfasern um mit einer Lösung, die eine Verbindung vom Alkoxysilan-Typ enthält, geschlichtete Glasfasern handelt.

6. Verbinder nach einem der vorhergehenden Ansprüche, **dadurch gekennzeichnet, dass** er eine bei 95 °C unter einer Spannung von 13 MPa über einen Zeitraum von 15 Stunden gemessene Kriechverformung weitgehend kleiner als oder gleich 2 %, vorzugsweise kleiner als 1 %, aufweist.

7. Verbinder nach einem der vorhergehenden Ansprüche, **dadurch gekennzeichnet, dass** er außerdem mindestens ein Additiv umfasst, das aus Pigmenten, Schlagzähigkeitsmodifikatoren und Antioxidantien ausgewählt ist.

8. Verbinder nach einem der vorhergehenden Ansprüche, **dadurch gekennzeichnet, dass** er durch Spritzguss erhalten wird.

9. Verwendung des Verbinders nach einem der vorhergehenden Ansprüche zum Verbinden von Wasserrohrleitungen und insbesondere Trinkwasserrohrleitungen.

## Claims

1. Coupling which makes it possible to connect the ends of two pipelines, **characterized in that** it comprises a mixture of PVDF homopolymer and of glass fibres and **in that** it exhibits a stress at the yield point, measured in tension at 23°C according to Standard ISO 527, of greater than or equal to 60 MPa.

2. Coupling according to Claim 1, **characterized in that** it exhibits an elastic modulus in tension, measured at 23°C according to Standard ISO 527, of greater than 4000 MPa, preferably of greater than 6000 MPa.

3. Coupling according to either one of the preceding claims, **characterized in that** the said mixture comprises a weight of glass fibres equal to or greater than 5% and equal to or less than 50%, in particular equal to or greater than 10% and equal to or less than 20%, of the total weight of the said mixture.

4. Coupling according to any one of the preceding claims, **characterized in that** said glass fibres contain between 10% and 30% by weight of basic oxides and are devoid of boron oxides.

5. Coupling according to any one of the preceding claims, **characterized in that** the said glass fibres are glass fibres sized by a solution containing a compound of the alkoxysilane type.

6. Coupling according to any one of the preceding claims, **characterized in that** it exhibits a creep strain, measured at 95°C under a stress equal to 13 MPa for 15 hours, substantially equal to or less than 2%, preferably less than 1%.

7. Coupling according to any one of the preceding claims, **characterized in that** it additionally comprises at least one additive chosen from pigments, impact modifiers and antioxidants.

8. Coupling according to any one of the preceding claims, **characterized in that** it is obtained by injection moulding.

9. Use of the coupling according to any one of the preceding claims, for coupling water pipelines and in particular drinking water pipelines.
